Europäisches Patentamt

(19) European Patent Office

Office européen des brevets

(11) Veröffentlichungsnummer : **0 030 284**
**B1**

(12) **EUROPÄISCHE PATENTSCHRIFT**

(45) Veröffentlichungstag der Patentschrift :
09.03.83

(51) Int. Cl.³ : **B 01 F 17/00, C 08 L 91/08**

(21) Anmeldenummer : **80107052.5**

(22) Anmeldetag : **14.11.80**

(54) Verfahren zur Herstellung von wässrigen Paraffindispersionen in Gegenwart von kationischen Polyelektrolyten als Dispergiermittel.

(30) Priorität : **29.11.79 DE 2948015**

(43) Veröffentlichungstag der Anmeldung :
**17.06.81 Patentblatt 81/24**

(45) Bekanntmachung des Hinweises auf die Patenterteilung : **09.03.83 Patentblatt 83/10**

(84) Benannte Vertragsstaaten :
**AT BE CH DE FR GB IT LI NL SE**

(56) Entgegenhaltungen :
**EP A 0 001 237**
**GB A 2 019 822**
**US A 3 392 131**

(73) Patentinhaber : **BASF Aktiengesellschaft**
**Carl-Bosch-Strasse 38**
**D-6700 Ludwigshafen (DE)**

(72) Erfinder : **Mueller, Richard, Dr.**
**Sonnenwendstrasse 33**
**D-6702 Bad Duerkheim (DE)**
Erfinder : **Hettche, Albert, Dr.**
**Kleistrasse 12**
**D-6711 Hessheim (DE)**
Erfinder : **Frey, Guenter, Dr.**
**Mainstrasse 13**
**D-6701 Dannstadt (DE)**

## Verfahren zur Herstellung von wäßrigen Paraffindispersionen in Gegenwart von kationischen Polyelektrolyten als Dispergiermittel

Die Erfindung betrifft ein Verfahren zur Herstellung von wäßrigen Paraffindispersionen mittels einer Dispergiermittelkombination, die sich aus gewissen kationischen Polyelektrolyten und anionischen oberflächenaktiven Mitteln zusammensetzt.

Wäßrige Paraffindispersionen wurden bisher u. a., wie z. B. aus der US-PS 2 655 496 bekannt ist, mittels wasserlöslichen Salzen längerkettiger Fettsäuren als Dispergiermittel hergestellt. Ein Nachteil dieser Methode besteht in der relativ großen benötigten Menge an diesen Tensiden, was den Prozeß und die erhaltenen Dispersionen verteuert. Ein weiterer Nachteil besteht darin, daß Seifen bekanntlich stark schäumen und außerdem gegenüber hartem Wasser nicht beständig sind. Schließlich sind sie für viele Anwendungen der Dispersionen ungeeignet, indem sie z. B. mit Isocyanat-Leimen, welche bei der Herstellung von Holzspanplatten eine Rolle spielen, nicht verträglich sind.

Aus der US-PS 3 965 032 sind wäßrige Latexdispersionen bekannt, welche mit anionischen oder kationischen Polyelektrolyten stabilisiert sind. U.A. werden auch Copolymerisate aus Butylacrylat und Dimethylaminoethylmethacrylat für diesen Zweck empfohlen. Zur Herstellung von Paraffindispersionen sind diese Copolymerisate aber allein nicht geeignet — es resultieren instabile Dispersionen.

Das Ziel der Erfindung war die Auffindung eines Dispergiermittels zur Herstellung von wäßrigen Paraffindispersionen, die beständig sind, möglichst schwach schäumen, elektrolytstabil und verträglich mit den zu behandelnden Substraten sind.

Ein weiteres Ziel war die Auffindung auch solcher Mittel, die auch bei geringer Dosierung optimale Wirkungen zeigen.

Das Ziel der Erfindung wurde überraschenderweise mit einem speziellen Dispergiermittelsystem erreicht. Das System stellt eine Mischung dar, die sich zusammensetzt aus

A. einem Copolymerisat, das 60 bis 80 Gewichtsteile (Meth)acrylamid, 15 bis 35 Gewichtsteile eines Di-$C_1$- bis $C_3$-Alkylamino-$C_2$- bis $C_4$-alkylesters der (Meth)acrylsäure und 1 bis 10 Gewichtsteile (Meth)acrylsäure als Monomerbausteine enthält, in Form seines mineralsauren Salzes, und

B. einem wasserlöslichen anionischen oberflächenaktiven Mittel in Form seines Alkalimetall- oder Ammoniumsalzes, welches Sulfogruppen oder mehr als eine Carboxylgruppe enthält, wobei das Gewichtsverhältnis A : B = 20 : 1 bis 3 : 1 beträgt.

Das Verfahren zur Herstellung der Paraffindispersionen beruht auf dem Einsatz einer Mischung von kationischen Polyelektrolyten und anionaktiven Stoffen. Daß dies möglich ist, stellt eine insofern überraschende Tatsache dar, daß man generell annehmen mußte, daß kationische Polyelektrolyte und anionaktive Stoffe miteinander nicht verträglich seien.

Die Komponente A der erfindungsgemäß einzusetzenden Dispergiermittel stellen die definitionsgemäßen Copolymerisate in Form ihrer mineralsauren Salze dar.

Comonomere sind einmal Acrylamid, Methacrylamid oder Mischungen davon. Bevorzugt setzt man Acrylamid ein. Diese Comonomerkomponente ist im Copolymerisat in einer Menge von 60 bis 80 Gewichtsteilen, vorzugsweise von 65 bis 75 Gewichtsteilen anwesend.

Die zweite Comonomerkomponente wird durch die definitionsgemäßen kationischen Ester der Acryl- oder Methacrylsäure dargestellt.

Bevorzugt setzt man Dimethyl- oder Diethylaminoäthyl(meth)acrylat ein.

Diese Komponente ist im Copolymerisat in einer Menge von 15 bis 35, vorzugsweise 20 bis 35 Gewichtsteilen anwesend.

Die dritte Komponente ist Acryl- oder Methacrylsäure, bevorzugt erstere, und zwar in einer Menge von 1 bis 10, vorzugsweise 1 bis 5 Gewichtsteilen.

Die Copolymerisate stellt man in an sich bekannter Weise durch radikalische Copolymerisation der drei Komponenten her und neutralisiert sie anschließend mit einer Mineralsäure, wie Schwefel- oder Salzsäure.

Die Copolymerisate haben bevorzugt, gemessen in 10 gew.%iger wäßriger Lösung bei 25 °C eine Viskosität (Brookfield) von ca. 3 000 bis 7 000 mPa.s.

Die Komponente B der Dispergierungsmittel stellen die definitionsgemäßen anionaktiven Stoffe dar.

Hierzu können alle Vertreter gezählt werden, die in Form der freien Säuren Sulfogruppen oder mehr als eine Carboxylgruppe enthalten, und soweit sie in neutralisierter Form wasserlöslich sind.

Als anionische Stoffe kommen bevorzugt $C_8$- bis $C_{20}$-Alkansulfonate, Ligninsulfonate, $C_8$- bis $C_{12}$-Alkylbenzolsulfonate, Kondensationsprodukte aus Naphthalinsulfonaten mit Formaldehyd, Salze der Polyacrylsäure oder Diisobutylen-Maleinsäureanhydrid-Copolymerisate (in verseifter Form) in Betracht. Alle Vertreter liegen bevorzugt in Form der Alkalimetall-, wie Natriumsalze oder der Ammoniumsalze vor.

Das Gewichtsverhältnis der Komponenten A und B beträgt 20 : 1 bis 3 : 1, bevorzugt 7 : 1 bis 4 : 1.

Die Einhaltung dieses Verhältnisses ist wichtig, da schon geringe Über- oder Unterschreitungen desselben einen starken Abfall der Wirkung des Dispergiermittels bewirken.

Die alleinige Verwendung der Komponenten A oder B bewirkt überhaupt keine Dispergierung des Paraffins.

Lediglich Seifen, die in Kombination mit den kationischen Copolymerisaten unwirksam sind, bewirken für sich allein eine stark schäumende Dispersion.

2

Die Dispergiermittel sind bereits in kleinen Mengen zudosiert sehr gut wirksam. Bezogen auf die Dispersion (Wasser + Paraffin) sind die Dispergiermittel je nach der Menge des zu dispergierenden Paraffins zu 0,5 bis 5, vorzugsweise 1 bis 3 Gew.% anwesend, und es gelingt über 60 gew.%ige, z. B. 65 gew.%ige wäßrige Paraffindispersionen herzustellen, welche zum Teil über Monate hinweg stabil und extrem schaumarm sind.

Ein weiterer wichtiger Vorteil der erfindungsgemäß hergestellten Paraffindispersionen liegt in der Möglichkeit, durch die kationisch-anionischen Dispergiermittel-Kombinationen die Ladung der Kolloidteilchen gezielt zu variieren und so dem jeweiligen anwendungstechnischen Problem anzupassen. Während die Kolloidteilchen der geschilderten Paraffindispersionen, die gemäß dem Stand der Technik z. B. Salze langkettiger Carbonsäuren als Emulgatoren enthalten, stets negativ geladen sind, kann man durch geeignete Wahl von Menge und Art der kationisch-anionischen Komponenten Paraffindispersionen herstellen, deren Ladungsspektrum von deutlich positiv über wenig bis zu deutlich negativ geladenen Typen reicht (vgl. Beispiele). Dadurch können die erfindungsgemäß hergestellten Paraffindispersionen bei Substraten verschiedensten Charakters Anwendung finden.

Die erfindungsgemäß hergestellten Paraffindispersionen eignen sich z. B. für die Hydrophobierung von Holzspanplatten oder von Textilien sowie für die Papier- und Lederbehandlung.

In den folgenden Beispielen genannte Teile sind Gewichtsteile 100 %iger Substanz.

## Beispiel 1

1 Teil eines Mischpolymerisates aus 71 Gew.-% Acrylamid, 27 Gew.-% Diethylaminoethylacrylat, 2 Gew.-% Acrylsäure (als Sulfat, das in nicht neutralisierter Form bei 25 °C gemessen in 10 %iger wäßriger Lösung eine Brookfield-Viskosität von 5 000 mPas aufweist) als kationische Komponente und 0,2 Teile eines $C_{16}$-Alkansulfonats (Na-Salz) als anionische Komponente werden in 53,8 Teilen Wasser gelöst. Diese Lösung wird auf 80 °C erwärmt. In diese Lösung emulgiert man 45 Teile aufgeschmolzenes, auf 80 °C erwärmtes Paraffin (Schmelzbereich 52-54 °C) ein unter Verwendung eines Polytrondispergierapparates PT 45-50 (Stufe 6 ca. 10 000 U/min, ohne Belastung ca. 25 m/s Umfangsgeschwindigkeit). Es wird solange emulgiert bis eine genügend feinteilige Paraffinemulsion entstanden ist.

Diese wird anschließend rasch unter leichtem Rühren und Kühlen mit kaltem Wasser auf Zimmertemperatur abgekühlt.

Man erhält eine stabile Paraffindispersion.

## Beispiel 2

1 Teil des in Beispiel 1 genannten kationischen Mischpolymerisates und 0,2 Teile eines mit NaOH verseiften Maleinsäureanhydrid-Diisobutylen-Mischpolymerisates werden in 43,8 Teilen Wasser gelöst und gemäß dem Verfahren gemäß Beispiel 1 55 Teile Paraffin einemulgiert. Nach dem Abkühlen erhält man eine sehr gute Paraffindispersion.

## Beispiel 3

In gleicher Weise erhält man aus 1 Teil des kationischen Mischpolymerisates gemäß Beispiel 1 und 0,2 Teilen eines Na-Ligninsulfonates in 48,8 Teilen Wasser mit 50 Teilen Paraffin eine sehr gute Emulsion mit hervorragenden Eigenschaften.

## Beispiel 4

Eine gute Paraffindispersion erhält man auch mit 0,75 Teilen des kationischen Mischpolymerisates gemäß Beispiel 1 und 0,05 Teilen eines Kondensationsproduktes aus Naphthalinsulfonat und Formaldehyd (Na-Salz) in 49,2 Teilen Wasser mit 50 Teilen Paraffin.

## Beispiel 5

Aus 1 Teil kationischem Mischpolymerisat gemäß Beispiel 1 und 0,2 Teilen des Ammoniumsalzes einer $C_{12}$-Alkylbenzol-sulfonsäure in 48,8 Teilen Wasser erhält man mit 50 Teilen Paraffin gemäß dem Verfahren von Beispiel 1 eine Paraffindispersion, die zwar nicht in allen Eigenschaften optimal ist, aber einen neutralen pH-Wert aufweist und bei höheren Scherbeanspruchungen koaguliert, was in Sonderfällen günstig sein kann.

## Beispiel 6

1 Teil der kationischen und 0,2 Teile der anionischen Komponente des Beispiels 1 ergeben mit 58,8 Teilen Wasser und 40 Teilen Paraffin eine stabile Paraffindispersion mit guten Eigenschaften.

3

## Beispiel 7

Mit 1 Teil kationischem Polymeren gemäß Beispiel 1 und 0,2 Teilen anionischer Komponente gemäß Beispiel 2 kann man mit 38,8 Teilen Wasser und 60 Teilen Paraffin eine relativ hochprozentige Dispersion mit guten Eigenschaften herstellen.

## Beispiel 8

Auch eine 65 %ige Paraffindispersion mit guten Eigenschaften erhält man aus 0,75 Teilen kationischem Polymeren gemäß Beispiel 1 und 0,05 Teilen anionischer Komponente gemäß Beispiel 4 mit 34,2 Teilen Wasser und 65 Teilen Paraffin.

Zum Vergleich wurde eine Paraffindispersion hergestellt, die gemäß dem Stand der Technik ein Ethanolaminsalz einer $C_{16}$-$C_{18}$-Fettsäure als Emulgator enthält. Die Vorschrift ist der gemäß Beispiel 1 ähnlich mit dem Unterschied, daß in diesem Fall Paraffin und Emulgator vorgelegt wurden, weil bei dem umgekehrten Verfahren wegen zu starken Schäumens eine brauchbare Emulsion kaum herstellbar ist.

## Vergleichsbeispiel

50 Teile Paraffin werden aufgeschmolzen, 3 Teile des Ethanolaminsalzes einer $C_{16}$-$C_{18}$-Carbonsäure darin gelöst, die Mischung auf 80 °C aufgeheizt und 47 Teile Wasser von 80 °C mit Hilfe des Polytron-Dispergierapparates PT 45-50 einemulgiert (Stufe 6 = 10 000 U/min ohne Belastung = ca. 25 m/s Umfangsgeschwindigkeit). Die Emulsion wird wie in Beispiel 1 emulgiert und abgekühlt.

In der folgenden Tabelle sind in der ersten Spalte die Produkte gemäß den Beispielen 1 bis 8 und Vergleichsbeispiel angegeben, in den weiteren Spalten deren Paraffingehalt, das Ergebnis von Reibtest, Verdünnungstest und Hartwassertest, pH-Wert, Schaum, Verträglichkeit mit Isocyanat-, Harnstoff/Formaldehyd-, Phenol/Formaldehyd- und Mischkondensat-Leim sowie die Teilchenladung (Zeta-Potential).

Beim Reibtest verreibt man einen Tropfen der Dispersion mit dem Finger auf der Handfläche. Je nachdem sich die Paraffindispersion ganz oder teilweise einreiben läßt oder bei geringster Beanspruchung zerstört wird, bewertet man den Test als « gut », « mittel » oder « schlecht ».

Beim Verdünnungstest mischt man 99 cm³ destilliertes Wasser mit 1 cm³ Paraffindispersion durch Schütteln gut durch und bewertet je nachdem sofort, kurze Zeit später oder deutlich später eine Wachsabscheidung erfolgt, mit « schlecht », « mittel » oder « gut ».

In gleicher Weise verfährt man beim Hartwassertest durch Abmischen von 90 cm³ hartem Wasser und 10 cm³ Paraffindispersion.

Der pH-Wert wird mit einem elektronischen pH-Meter gemessen.

Der Schaumwert wird durch Vergleich des Dispersionsgewichtes mit dem Dispersionsvolumen unter Berücksichtigung des spezifischen Gewichtes der Bestandteile unmittelbar nach der genormten Herstellung der Paraffindispersion ermittelt.

Ein wichtiges Charakteristikum vor allem bei der Verwendung von Paraffindispersionen für die Hydrophobierung von Holzspanplatten ist die Verträglichkeit mit diversen Harzleimflotten, welche bei der Spanplatteproduktion mitverwendet werden.

Bei der Prüfung auf Isocyanat-Verträglichkeit wird zunächst eine 50 %ige Emulsion des Isocyanat-Harzes mit einem entsprechenden Emulgator in 49 Teilen Wasser hergestellt und diese im Gewichtsverhältnis 1 : 1 mit der Paraffindispersion (ber. 50 %ig) vermischt. Je nachdem schon nach einigen Minuten oder erst nach mehreren Stunden eine Ausflockung zu beobachten ist, spricht man von « schlechter » oder « guter » Isocyanat-Verträglichkeit.

Ähnlich verfährt man bei der Prüfung der Verträglichkeit mit Harnstoff-Formaldehyd-Leimflotten. Man bereitet eine Mischung aus Harnstoff-Formaldehyd-Leim, Paraffindispersion, Wasser und der sogenannten Härterlösung (Ammoniumchlorid, Ammoniak 25 %ig, Wasser) und filtriert nach 15 Minuten durch ein engmaschiges Sieb (10 000 Maschen/cm²). Je nachdem kein, nur ein geringer oder ein beträchtlicher Rückstand feststellbar ist, spricht man von « guter », « mittlerer » und « schlechter » Harnstoff-Formaldehyd-Leim-Verträglichkeit.

Genau in gleicher Weise führt man den Test auf Verträglichkeit mit Harnstoff/Phenol/Melamin/Formaldehyd-Mischkondensat durch.

Bei der Prüfung auf Phenol-Formaldehyd-Leim-Verträglichkeit mischt man in einfacher Weise unter Rühren 90 Teile Phenol-Formaldehyd-Leim mit 10 Teilen Paraffindispersion (ber. 50 %ig) und beurteilt nach 15 Minuten auf dem Sieb.

Das Zeta-Potential wird mit Hilfe des Laser-Zee-Meters der Pen Kem Corp. (Croton-on-Hudson, N.Y.) in üblicher Weise gemessen.

Tabelle

| Produkt gemäß | Gew.-% Paraffin | Reib-test | Verdünnungs-test | Hartwasser-test | pH-Wert | Schaum cm³/ 100 g Emul-sion | Isocyanat-verträg-lichkeit | Harnstoff-Formaldehyd-verträglich-keit | Phenol-Formald.-verträg-lichkeit | Mischharz-verträg-lichkeit | Zeta-Potential (mV) |
|---|---|---|---|---|---|---|---|---|---|---|---|
| Beisp. 1 | 45 | gut | gut | gut | 4,5 | 0 | schlecht | gut | gut | gut | + 19 |
| Beisp. 2 | 55 | gut | gut | gut | 6,4 | 0 | gut | gut | gut | gut | - 34 |
| Beisp. 3 | 50 | gut | gut | gut | 4,9 | 0 | gut | gut | gut | gut | + 21 |
| Beisp. 4 | 50 | gut | gut | gut | 4,5 | 0 | gut | gut | gut | gut | + 24 |
| Beisp. 5 | 50 | gut | gut | mittel | 7,1 | 3 | schlecht | gut | schlecht | gut | - 41 |
| Beisp. 6 | 40 | gut | gut | mittel | 4,6 | 0 | schlecht | gut | gut | gut | + 19 |
| Beisp. 7 | 60 | gut | gut | gut | 6,8 | 0 | gut | gut | gut | gut | - 35 |
| Beisp. 8 | 65 | gut | gut | mittel | 4,6 | 0 | schlecht | gut | gut | gut | - 18 |
| Vergleichs-beispiel | 50 | mittel | gut | schlecht | 7,8 | 70 | schlecht | gut | schlecht | gut | - 72 |

**Ansprüche**

1. Verfahren zur Herstellung von wäßrigen Paraffindispersionen durch Dispergieren von Paraffin in Wasser in Gegenwart von Dispergiermitteln auf Basis von kationischen Polyelektrolyten, dadurch gekennzeichnet, daß man als Dispergiermittel eine Mischung einsetzt, die sich zusammensetzt aus

A. einem Copolymerisat, das 60 bis 80 Gewichtsteile (Meth)acrylamid, 15 bis 35 Gewichtsteile eines Di-$C_1$-bis $C_3$-Alkylamino-$C_2$- bis $C_4$-alkylesters der (Meth)acrylsäure und 1 bis 10 Gewichtsteile (Meth)acrylsäure als Monomerbausteine enthält, in Form seines mineralsauren Salzes, und

B. einem wasserlöslichen anionischen oberflächenaktiven Mittel in Form seines Alkalimetall- oder Ammoniumsalzes, welches Sulfogruppen oder mehr als eine Carboxylgruppe enthält, wobei das Gewichtsverhältnis A : B = 20 : 1 bis 3 : 1 beträgt.

2. Verfahren gemäß Anspruch 1, dadurch gekennzeichnet, daß man — bezogen auf die wäßrige Paraffindispersion — 0,5 bis 5 Gew.% des Dispergiermittels einsetzt.

**Claims**

1. Process for the preparation of aqueous paraffin dispersions by dispersing paraffin in water in the presence of dispersants based on cationic polyelectrolytes, wherein a mixture composed of

A. a copolymer, in the form of its mineral acid salt, which contains from 60 to 80 parts by weight of (meth)acrylamide, from 15 to 35 parts by weight of a di-$C_1$-$C_3$-alkylamino-$C_2$-$C_4$-alkyl ester of (meth)acrylic acid and from 1 to 10 parts by weight of (meth)acrylic acid as monomer units and

B. a water-soluble anionic surface-active agent, in the form of its alkali metal or ammonium salt, which contains sulfo groups or more than one carboxyl group, the weight ratio A : B being from 20 : 1 to 3 : 1, is employed as the dispersant.

2. Process according to claim 1, wherein from 0.5 to 5 % by weight of the dispersant, based on the aqueous paraffin dispersion, is employed.

**Revendications**

1. Procédé de préparation de dispersions aqueuses de paraffine par dispersion de paraffine dans de l'eau en présence d'agents de dispersion à base de polyélectrolytes cationiques, caractérisé en ce que l'agent de dispersion est un mélange de

A. un copolymérisat contenant 60 à 80 % en poids de (méth)acryl-amide, 15 à 35 % en poids d'un ester de di-alcoyl(en $C_1$ à $C_3$)amino-alcoyle (en $C_2$ à $C_4$) de l'acide (méth)acrylique et 1 à 10 % en poids d'acide (méth)acrylique comme éléments monomères, sous forme de sel d'un acide minéral, et de

· B. un composé tensio-actif anionique hydrosoluble, contenant des groupes sulfo ou plus d'un groupe carboxyle, sous forme de sel d'un métal alcalin ou d'ammonium, les proportions pondérales de A et de B étant dans un rapport de 20 : 1 à 3 : 1.

2. Procédé suivant la revendication 1, caractérisé en ce que, par rapport à la dispersion aqueuse de paraffine, on emploie 0,5 à 5 % en poids de l'agent de dispersion.